# EUROPÄISCHE PATENTSCHRIFT

(11) **EP 0 972 606 B1**
(45) Veröffentlichungstag und Bekanntmachung des Hinweises auf die Patenterteilung: **18.04.2001**
(21) Anmeldenummer: 98113430.7
(22) Anmeldetag: 18.07.1998
(51) Int. Cl.: B23K 35/32, B23K 35/30, B23K 9/04

(54) **Pulverförmiger Zusatzwerkstoff für eine Verschleisschutzschicht und Verfahren zu deren Aufbringen**
Powder material for wear resistant coatings and process of applying same
Matériau pulvérulent pour des couches résistantes à l'usure et procédé d'application de celles-ci

(43) Veröffentlichungstag der Anmeldung: 19.01.2000
(73) Patentinhaber: DURUM Verschleissschutz GmbH, 47805 Krefeld (DE)
(72) Erfinder: Schreiber, Frank, Dr., 47546 Kalkar (DE); Knauf, Peter, 40629 Düsseldorf (DE)
(74) Vertreter: Nunnenkamp, Jörg, Dr.

(56) Entgegenhaltungen:
- EP-A- 0 124 134
- EP-A- 0 309 822
- EP-A- 0 446 978
- EP-A- 0 460 211
- DE-A- 4 008 091
- FR-A- 1 153 795
- US-A- 4 177 324
- US-A- 4 224 382

## Beschreibung

Die Erfindung betrifft einen pulverförmigen Zusatzwerkstoff zum Aufbringen einer Verschleißschutzschicht aus einer Nickellegierungsmatrix und eingelagerten (Wolfram- und) Vanadiumkarbiden auf eine zu schützende Oberfläche im Wege des Metallspritzens, insbesondere Lichtbogen- oder Plasmaschweißens.

Derartige Verschleißschutzschichten werden üblicherweise auf die Oberfläche von Werkzeugen sowie Geräten im Bergbau, in der Tiefbohrtechnik, in der keramischen Industrie und dergleichen aufgebracht. Verschleißschutzschichten dienen im allgemeinen dazu, dem fortschreitenden Materialverlust an der Oberfläche eines festen Körpers entgegenzuwirken. Ein derartiger Materialverlust oder auch Verschleiß wird regelmäßig durch mechanische Ursachen, das heißt im allgemeinen einen Kontakt und Relativbewegungen eines Gegenkörpers hervorgerufen. Im Rahmen tribologischer Untersuchungen hat man folglich verschiedene Verfahren zur Aufbringung von metallischen Überzügen entwickelt, zu welchen Metall-Spritzüberzüge zählen. Diese werden regelmäßig bei besonders großen oder nur örtlich zu behandelnden Werkstücken aufgebracht. Dabei wird das Metall in Draht- oder Pulverform durch ein Brenngasgemisch oder durch einen Lichtbogen erschmolzen und in Form feiner Tröpfchen durch Druckluft auf das zu behandelnde Werkstück geschleudert. Die Haftung auf der Oberfläche ist rein mechanisch, weshalb diese im allgemeinen durch Sandstrahlen in mittlerer Rauhigkeit aufgerauht wird.

Aus der Praxis sind Verfahren zum Aufbringen von Verschleißschutzschichten des beschriebenen grundsätzlichen Aufbaus auf Basis autogener Schweißverfahren oder elektrischer Lichtbogenschweißverfahren bekannt. Dabei arbeitet man im Rahmen des elektrischen Lichtbogenschweißens zum Aufbringen von Verschleißschutzschichten üblicherweise mit verbrauchenden Stabelektroden oder Fülldrahtelektroden, welche aus legierten Röhrchen mit feinteiliger Füllung bestehen. Stabelektroden oder Fülldrahtelektroden werden generell nach DIN 8571 unterschieden und zeichnen sich im Rahmen der Erfindung durch eine Nickel-Umhüllung sowie eine innenseitige Pulverfüllung aus.

Neben den vorgenannten Auftragsschweißverfahren ist es generell bekannt, pulverförmige Zusatzwerkstoffe direkt im Rahmen eines Plasma-Pulver-Auftragsschweißens auf ein Substrat aufzubringen. Hier wird grundsätzlich so gearbeitet, daß der pulverförmige Zusatzwerkstoff aus einem Vorratsbehälter über eine Dosiervorrichtung mit Hilfe eines Fördergases dem zugehörigen Plasmabrenner zugeführt wird. Folglich kann auf eine Schweißelektrode verzichtet werden.

Die Nickellegierungsmatrix dient im wesentlichen dazu, eingelagerte (Wolfram-)Karbid-Körner aufzunehmen und abzustützen. Diese Karbidkörner bilden die eigentliche Panzerung, welche größtenteils für die Verschleiß- und Reibungseigenschaften der aufgebrachten Verschleißschutzschicht verantwortlich ist. Nach dem Stand der Technik werden als Schweißelektroden Nickelröhrchen eingesetzt, in welche eine genau spezifizierte Mischung aus Wolframkarbiden sowie eine entsprechende Menge Legierungselemente eingefüllt werden.

Auf diese Weise erhält man für die Verschleißschutzschicht z. B. eine Nickel-(Chrom)-Bor-Silicium-Matrix in Form einer entsprechenden Legierung (vergl. DE 40 08 091 C2).

Außerdem ist es im Rahmen des Lichtbogenschweißens zum Aufbringen von Verschleißschutzschichten generell bekannt, mit Röhrchen aus einer Nickelbasislegierung oder aus einer Kobaltbasislegierung zu arbeiten (vergl. beispielsweise DE 87 16 743 U1). Die im Rahmen des elektrischen Lichtbogenschweißens aufgebrachten Verschleißschutzschichten mit Nickellegierungsmatrix können nicht immer mit befriedigendem Ergebnis hergestellt werden. Außerdem ergeben sich bei der schweißtechnischen Verarbeitung mit einem elektrischen Lichtbogen weitere Nachteile dergestalt, die auf die hohe thermische Belastung der Wolframkarbide zurückzuführen sind. Denn es kann zu einer Zersetzung der Wolframkarbide kommen, und zwar größtenteils in die beiden Hartphasen Wolframmonokarbid WC sowie Diwolframkarbid W₂C. Insbesondere das letztgenannte Diwolframkarbid ist aufgrund seines niedrigeren E-Moduls (im Vergleich zu WC) spröder und somit weniger geeignet für den Einbau in eine Verschleißschutzschicht (vergl. US-A 2 137 471).

Auch kann es durch die im Lichtbogen herrschenden Temperaturen zu einer hohen Aufkohlung kommen, das heißt, es wird gleichsam bei den sehr hohen Temperaturen des Plasmaentladungsraumes Graphit in der Legierungsmatrix abgeschieden. Dieses will man auf jeden Fall vermeiden, da die Matrixlegierungen einen möglichst niedrigen Kohlenstoffgehalt aufweisen sollen, um Versprödungen entgegenzuwirken.

An diesen grundsätzlichen Problemen ändern auch die in der EP-A-0 460 211 beschriebenen Maßnahmen nichts. Zwar wird hier eine pulverförmige Mischung zur Herstellung einer Verschleißschutzschicht durch Auftragsschweißen beschrieben, die unter anderem auf eine Nickellegierungsmatrix zurückgreift. Allerdings spricht das betreffende Beispiel 3 lediglich den Zusatz von Vanadiumkarbid-Körnern mit einer durchschnittlichen Korngröße von 70 *µ*m an. Dabei werden Härten von 510 bis 590 HV erreicht.

Grundsätzlich kann es beim Stand der Technik zu Abplatzungen der Panzerung, insbesondere bei Schlagbeanspruchungen oder dynamischen Belastungen, kommen. Hinzu kommt, daß das (gegenüber den Hartphasen weiche) Matrix-Grundgefüge frühzeitig verschleißen kann, insbesondere bei hoher abrasiver Beanspruchung mit mineralischen Partikeln > 20 *µ*m, so daß die eigentlich zu schützenden bzw. abzustützenden Wolframkarbid-Hartstoffe bzw. Wolframkarbid-Körner herausgewaschen werden. Folglich ist eine Schädigung der Verschleißschutzschicht nicht nur dergestalt zu beobachten, daß die entstehende (Di-)Wolframkarbid-Panzerung hohe Belastungen nicht (mehr) aufnehmen kann, sondern auch aufgrund der Tatsache, daß die (an sich schützende) Legierungsmatrix zusätzlich abgetragen wird.

Hinzu kommt, daß bei abrasiv-adhäsiven Beanspruchungen, wie z.B. bei Preßschnecken in der Ton-Industrie, der Einsatz von wolframkarbidverstärkten Schutzschichten insofern eingeschränkt ist, als hier die in der
Panzerung hervorstehenden Wolframkarbid-Hartstoffe bzw. -Körner zu einem Anhaften der Tonmasse führen. Folglich sind enorme Antriebsleistungen erforderlich, um einen kontinuierlichen Produktionsbetrieb mit ausreichendem Durchsatz zu gewährleisten. Jedenfalls können die vorbeschriebenen Zusatzwerkstoffe, Schweißelektroden und Herstellungsverfahren für Verschleißschutzschichten auf Basis von Wolframkarbiden insgesamt nicht befriedigen. - Hier will die Erfindung Abhilfe schaffen.

Der Erfindung liegt das technische Problem zugrunde, einen pulverförmigen Zusatzwerkstoff zum Aufbringen einer Verschleißschutzschicht aus einer Nickellegierungsmatrix und eingelagerten Karbiden auf eine zu schützende Oberfläche im Wege des Metallspritzens anzugeben, welcher eine verbesserte Gefügemorphologie der Nickellegierungsmatrix sowie optimierte Gleiteigenschaften der Verschleißschutzschicht erzeugt. Außerdem soll ein geeignetes Verfahren zur Aufbringung derartiger Verschleißschutzschichten angegeben werden.

Gegenstand der Erfindung zur Lösung dieser Aufgabe ist ein pulverförmiger Zusatzwerkstoff, wie er in dem Patentanspruch 1 beschrieben wird. Vorteilhafte Ausgestaltungen dieses Zusatzwerkstoffes sind Gegenstand der Ansprüche 2 bis 8. Die Erfindung betrifft ferner ein Verfahren zum Aufbringen einer Verschleißschutzschicht aus einer Nickellegierungsmatrix mit eingelagerten Wolfram- und Vanadiumkarbiden auf eine zu schützende Oberfläche im Wege des Lichtbogenschweißens auf Basis des erfindungsgemäßen pulverförmigen Zusatzwerkstoffes. Dieses Verfahren findet seinen Niederschlag in den Patentansprüchen 9 und 10.

Im Rahmen der Erfindung wird eine gesteuerte Verbesserung der Gefügemorphologie der Nickellegierungsmatrix sowie eine Optimierung des Verschleißwiderstandes durch den gezielten Einsatz von Vanadium bzw. Vanadiumkarbid erreicht. Im einzelnen wird die thermisch bedingte und zuvor beschriebene Wolframkarbid-Zersetzung kompensiert, weil das in der Schmelze gelöste Vanadium bzw. Vanadiumkarbid zu primären Karbidausscheidungen aus der Schmelze führt. Bei diesen primären Karbidausscheidungen handelt es sich größtenteils um Vanadiumkarbid VC, d.h., beispielsweise Vanadiumnitrid VN wird gerade nicht gebildet. Auch die Erzeugung von Diwolframkarbid wird unterdrückt. Gleiches gilt für Vanadiumpentoxid V₂O₅.

Jedenfalls wird der zuvor skizzierten hohen Aufkohlung der Nickellegierungsmatrix erfolgreich begegnet, eben durch den Zusatz von Vanadium, welches in gelöster Form mit eventuell entstehendem Kohlenstoff zu Vanadiumkarbid umgesetzt wird. Diese primären Karbide bzw. Vanadiumkarbid-Keime bewirken eine feinkörnige (und erwünschte) Erstarrung der Restschmelze bzw. der Nickellegierungsmatrix. Dadurch, daß eine Aufkohlung gleichsam automatisch vermieden wird, kann einer Versprödung der Nickellegierungsmatrix erfolglich begegnet werden.

Durch die primäre Bildung von Vanadiumkarbid VC wird darüber hinaus vermieden, daß sich andere vanadiumreiche Mischkarbide mit veränderten Eigenschaften, insbesondere spröde Phasen, bilden können. Auch ist es nicht erforderlich, mit im Vergleich zur stöchiometrischen Zusammensetzung unterkohlten Karbiden zu arbeiten, wie dieses von der DE-AS 1 558 873 vorgesehen wird, um einer Karbidzersetzung unter Abscheidung von Graphit bei den sehr hohen Temperaturen des Plasmaentladungsraumes entgegenwirken zu können. Folglich wird die Erzeugung der Schmelzverbundschicht bzw. Nickellegierungsmatrix insofern nicht behindert, als der sogenannte "Selbstfließeffekt" der Legierung nicht unterdrückt wird, also eine unverändert homogene Verteilung der Legierungsbestandteile über die Oberfläche erreicht wird (vgl. DE 87 16 743 U1).

Zusätzlich wird durch die Zugabe von Vanadiumkarbid-Körnern der Verschleißwiderstand deutlich erhöht sowie eine Verbesserung der Gleiteigenschaften erreicht. Dieses läßt sich im wesentlichen darauf zurückführen, daß Vanadiumkarbid eine außerordentlich hohe Härte bis nahezu 3.000 HV (Vickershärte) aufweist. - Durch das zugemischte Vanadium bzw. die Vanadiumkarbid-Körner läßt sich darüber hinaus die Verschleißfestigkeit der Nickellegierungsmatrix (mit eingelagerten Wolframkarbid-Körnern) in weiten Grenzen beeinflussen. In diesem Zusammenhang ist es lediglich erforderlich, daß die Vanadiumkarbid-Körner fest in die Nickellegierungsmatrix eingebunden werden, was durch ein Anschmelzen ihrer Oberfläche geschieht. In gleicher Weise muß die Nickellegierungsmatrix eine bestimmte Härte besitzen, so daß die angestrebte Stützwirkung erreicht wird.

Durch die erfindungsgemäß angegebene stöchiometrische Zusammensetzung des pulverförmigen Zusatzwerkstoffes wird nicht nur die Verschleißfestigkeit der Verschleißschutzschicht deutlich erhöht, sondern es wird gleichzeitig eine homogene Verteilung der Karbide in der Nickellegierungsmatrix erzielt. Voraussetzung hierfür ist die Einhaltung der angegebenen Zusammensetzung sowie die Verwendung der beschriebenen Korngrößen. Dabei wird beispielsweise mit einer Körnung von 0,01 bis 0,3 mm für die Wolframkarbid-Körner und mit einer Körnung von 0,05 bis 0,3 mm für die Vanadiumkarbid-Körner gearbeitet. Alternativ hierzu ist die Kombination von Wolframkarbid-Körnern der Größe 0,3 mm bis 2,0 mm mit Vanadiumkarbid-Körnern der Körnung 0,05 mm bis 0,3 mm möglich (vgl. Patentanspruch 1).

Insgesamt lassen sich im Rahmen der Erfindung verschleißhemmende Wechselwirkungen zwischen dem Legierungshauptbestandteil Nickel, dem Wolfram bzw. den Wolframkarbid-Körnern und dem Vanadium bzw. den Vanadiumkarbid-Körnern beobachten und gezielt steuern. Im Ergebnis ermöglicht insbesondere der Zusatz von Vanadium eine Verbesserung der Gefügemorphologie der Legierungsmatrix in Richtung höhere Festigkeit, so daß in Verbindung mit den hier eingelagerten Vanadiumkarbid-Körnern und den Wolframkarbid-Körnern der Verschleißwiderstand erheblich erhöht und gleichzeitig die Rauhigkeit der Beschichtung vermindert wird.

Im Rahmen der erfindungsgemäßen Lehre wird das Verfahren so gesteuert, daß die Vanadiumkarbid- und Wolframkarbid-Körner während des Schweißvorganges praktisch nicht in Lösung gehen oder beim Schweißvorgang in Lösung gehen und beim Erkalten in homogener Verteilung ausgeschieden werden. Das Inlösunggehen der jeweiligen Karbid-Körner in der Nickellegierungsmatrix folgt komplexen thermodynamischen Gesetzmäßigkeiten. Insbesondere hängt das zuvor beschriebene Verhalten von der Körnung (d.h. der Körnungsgröße), der (Schweiß-)Zeit und der (Schweiß-)Temperatur ab. Selbstverständlich läßt sich über die Körnungsgröße auch die Oberfläche der Wolfram-/Vanadiumkarbid-Körner einstellen. Die vorgenannten Parameter werden im Rahmen der Ansprüche 9 und 10 näher spezifiziert, wobei insbesondere über die Größen (Schweiß-)Spannung sowie (Schweiß-)-Stromstärke die (Schweiß-)Temperatur unter Verwendung vorgegebener Korngrößen für die Vanadium- und Wolframkarbid-Körner vorgegeben wird.

Jedenfalls läßt sich die Oberfläche der Vanadiumkarbid-Körner unter Analyse der sie aufnehmenden Schmelze so einstellen, daß sich die erfindungsgemäß angestrebte Verschleißverbesserung ebenso wie die Optimierung der Gefügemorphologie der Legierungsmatrix reproduzierbar erreichen läßt. Sofern die Vanadium-Körner beim Schweißvorgang in der Nickellegierungsmatrix in Lösung gehen, werden sie beim Erkalten in homogener Verteilung ausgeschieden, nämlich gleichmäßig zwischen den Wolframkarbid-Körnern.

Auch bei hohem Wolframgehalt in der pulverförmigen Mischung wird im Rahmen der Erfindung eine Nickellegierungsmatrix zur Verfügung gestellt, weil das metallische Wolfram in der Mischung dazu führt, daß Wolframkarbid in Form von feinen Kristallen in homogener Verteilung ausgeschieden wird. Dieses geschieht in der Matrix, die unverändert eine Nickellegierungsmatrix bleibt. Selbstverständlich werden die solchermaßen erzeugten Wolframkarbid-Kristalle in diesem Fall der Nickellegierungsmatrix nicht zugerechnet. Sofern Wolframschmelzkarbide (WSC) zum Einsatz kommen, handelt es sich hier um ein auf dem Schmelzweg hergestelltes Gemisch aus WC und W₂C. Vergleichbares gilt für Vanadiumschmelzkarbide.

Im folgenden wir die Erfindung anhand von vier Figuren und eines Beispiels im Detail weiter erläutert. Die Fig. 1 zeigt eine Seitenansicht einer Lichtbogenschweiß-Auftragseinrichtung, während in der Fig. 2 eine Plasma-Pulver-Auftragsschweißeinrichtung dargestellt ist. Gegenstand der Fig. 3 und 4 sind schließlich ein konventionelles Legierungsgefüge und ein Mikrogefüge einer auf Basis des erfindungsgemäßen Zusatzwerkstoffes dargestellten Nickellegierungsmatrix mit eingelagerten Wolframkarbid- und Vanadiumkarbid-Körnern.

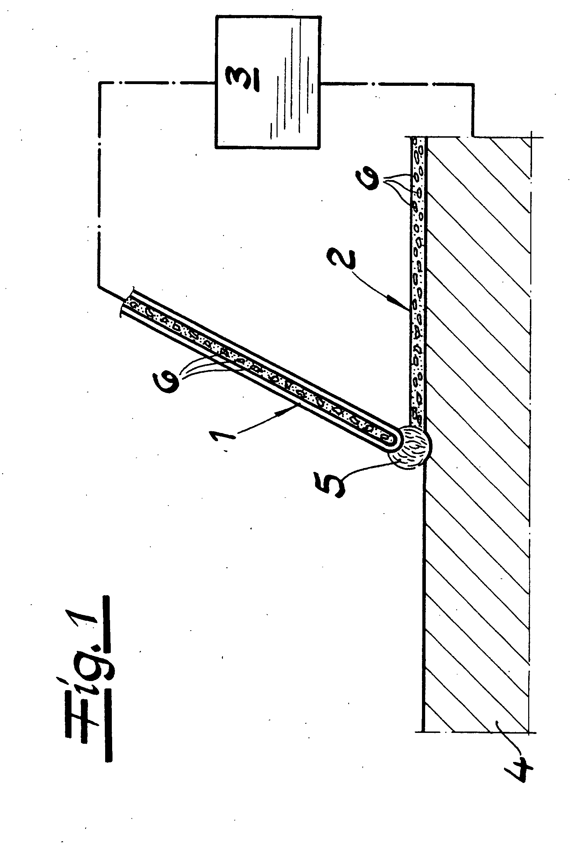

Bei der gezeigten Lichtbogenschweiß-Auftragseinrichtung nach Fig. 1 wird dergestalt vorgegangen, daß eine Elektrode 1 zum Lichtbogenschweißen einer Beschichtung 2 eingesetzt wird, und zwar beaufschlagt mittels einer Spannungseinrichtung 3, welche eine elektrische Spannung zwischen Elektrode 1 und Substrat 4 erzeugt. Die Beschichtung 2 wird auf das Substrat 4 aufgebracht, vorliegend ein Metallsubstrat 4. Hierbei kann es sich um eine Stahloberfläche eines zu beschichtenden Werkzeuges handeln. Durch Beaufschlagung der Spannungseinrichtung 3 wird ein Lichtbogen 5 zwischen (Stab-)Elektrode 1 und Substrat 4 erzeugt. Durch den Lichtbogen 5 werden die pulverförmigen Inhaltsstoffe in der (Stab-)Elektrode 1 ebenso wie deren Nickelmantel geschmolzen und auf das Substrat 4 als Beschichtung 2 aufgebracht. Im Inneren der (Stab-)Elektrode bzw. des Nickelröhrchens 1 ist die pulverförmige Füllung zu erkennen, welche die in den Patentansprüchen 1 bis 5 beschriebene Zusammensetzung aufweist. Zusätzlich sind in die vorgenannte Füllung Wolframkarbid- und/oder Vanadiumkarbid-Körner 6 eingebettet, die in der Beschichtung 2 die eigentliche Panzerung bilden. Auch Flußmittel werden in die Füllung eingemischt.

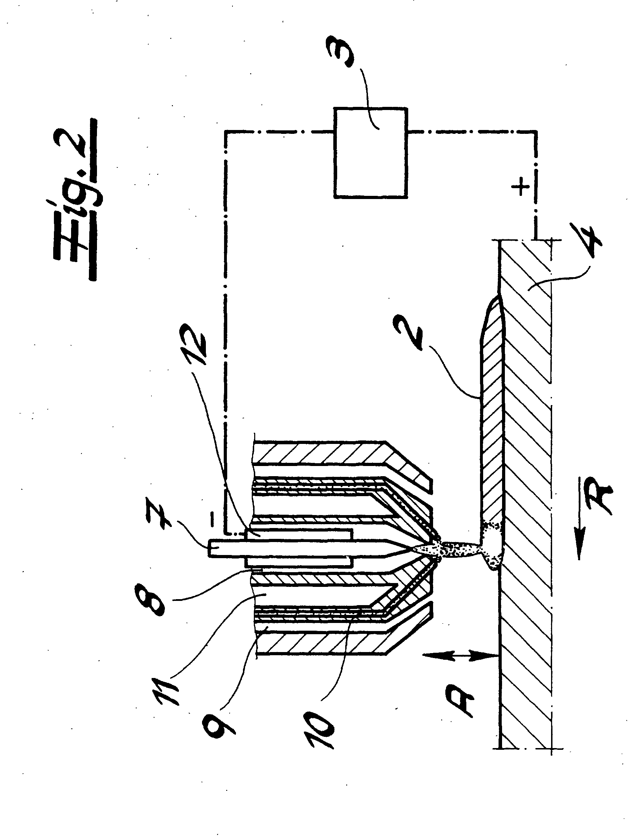

In der Fig. 2 ist eine Plasma-Pulver-Auftragsschweißeinrichtung gezeigt. Diese weist eine (Wolfram-)Elektrode 7 auf, welche mittels der Spannungseinrichtung 3 gegenüber dem Substrat 4 mit einer (Gleich-)Spannung beaufschlagt wird. Die jeweiligen Pole sind durch ein Plus- und Minuszeichen angedeutet. Durch die Zufuhr eines Plasmagases 8 entsteht ein Plasma zwischen der gezeigten Vorrichtung und dem Substrat 4. Zusätzlich wird ein Schutzgas 9 zugeführt. Das erfindungsgemäße Pulver bzw. der pulverförmige Zusatzwerkstoff wird mittels eines Fördergases 10 in Richtung auf das Plasma geleitet. Schließlich sind noch eine Kühlung 11 sowie ein Stromkontakt 12 für die (Wolfram-)Elektrode 7 zu erkennen.

Beim Plasma-Pulver-Auftragsschweißen unterscheidet man generell zwischen einer sogenannten inneren Pulverzuführung und der hier dargestellten äußeren Pulverzufuhr. Bei der inneren Pulverzuführung gelangt das Pulver im Strom des Fördergases 10 unmittelbar im Bereich einer Plasmadüse innerhalb der Brennergeometrie in das Plasma bzw. die Plasmasäule. Da zwischen dem thermisch expandierenden Plasmagas und dem Fördergas 10 eine hohe Geschwindigkeitsdifferenz herrscht, wird das Pulver als Folge der Injektorwirkung gleichsam in den Plasmastrahl gesaugt und in Richtung Substrat 4 beschleunigt. Der Lichtbogen dient dabei hauptsächlich zum An- bzw. Aufschmelzen des Pulvers und zum Anschmelzen des Substrates 4.

Bei der hier gezeigten äußeren Pulverzufuhr wird das Pulver erst außerhalb der Brennergeometrie dem Plasmastrahl zugeführt und besitzt folglich eine wesentlich kürzere Verweildauer im Plasma bzw. im Lichtbogen. Dieses führt zu einer erheblich geringeren Wärmeaufnahme des Zusatzwerkstoffes. Dieses ist mit einer geringeren thermischen Belastung verbunden, birgt jedoch die Gefahr von Bindefehlern bzw. einer zu hohen Substratwerkstoffaufmischung. Bei der äußeren Zufuhr ist der Pulvernutzungsgrad in hohem Maße abhängig vom Abstand A des Brenners zum Substrat 4. Er (der Pulvernutzungsgrad) ist im allgemeinen niedriger als bei einer inneren Pulverzuführung.

### Beispiel:

Zum Auftragsschweißen wird ein Pulver bzw. ein pulverförmiger Zusatzwerkstoff verwendet, welcher Wolframkarbid-Körner mit einer Körnung von 0,01 mm bis 0,3 mm und Vanadiumkarbid-Körner mit einer Körnung von 0,05 mm bis 0,3 mm aufweist. Die Mischungsanteile des Pulvers sind wie folgt bemessen:

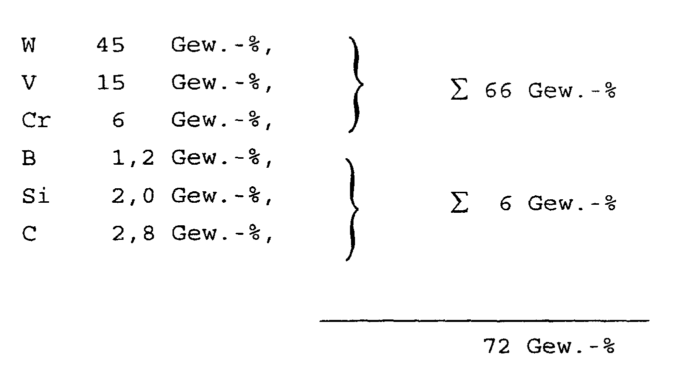

wobei der Restanteil (28 Gew.-%) Nickel ist. Dieser liegt entweder in Pulverform vor oder wird über ein Nickelröhrchen als verbrauchende Schweißelektrode in die Beschichtung eingetragen. Selbstverständlich ist auch eine Kombination der vorgenannten Maßnahmen denkbar.
Schweißparameter: 24 V und 150 A.

Erreichbare Härte: 570 bis 650 HV der Nickellegierungsmatrix sowie mehr als 2.000 HV der eingelagerten WC-Partikel.

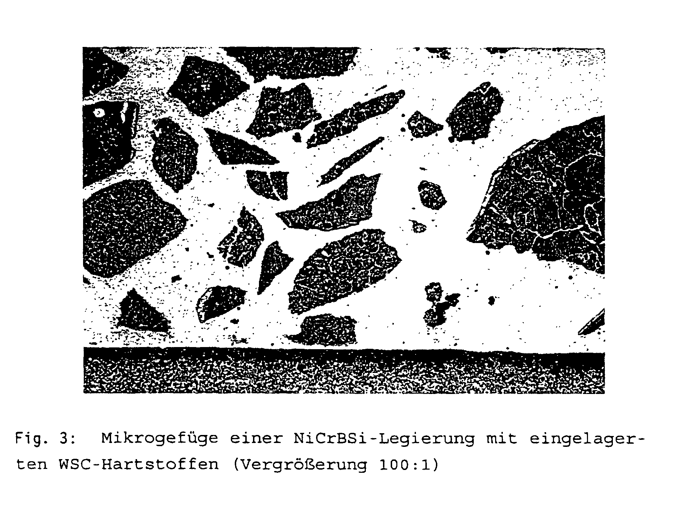

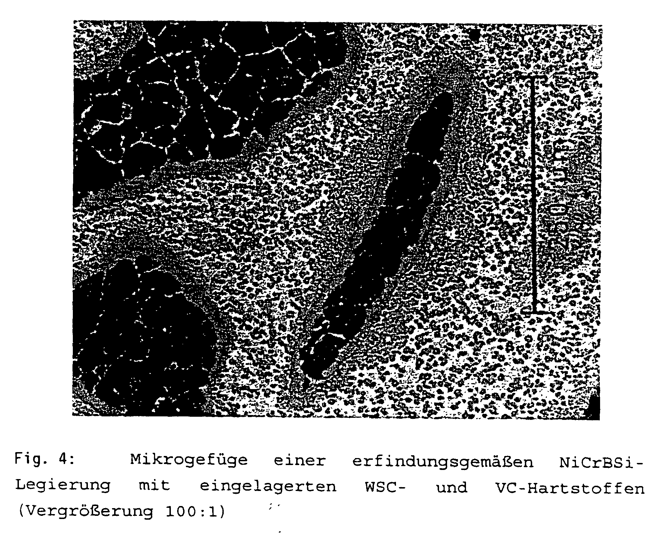

Anhand der nachfolgenden Fig. 3 und 4 läßt sich besonders deutlich der Unterschied zwischen einer konventionellen Legierung und der mit dem erfindungsgemäßen Zusatzwerkstoff erreichbaren Verschleißschutzschicht erkennen. Das typische Mikrogefüge bei einer konventionellen Legierung ist in Fig. 3 dargestellt und weist in eine Nickellegierungsmatrix (heller Bereich) eingelagerte WSC-Partikel auf. (WSC = Wolframschmelzkarbid; dunkle Inseln). Während die Matrix eine Härte von etwa 450 HV besitzt, erreichen die eingelagerten WSC-Partikel eine Härte von mehr als 2.000 HV. Eine Verschleißbeanspruchung bewirkt insbesondere bei kleinen WSC-Partikeln das Herauswaschen der Matrixlegierung und das anschließende Herausbrechen der WSC-Partikel.

Im Rahmen der Erfindung werden in das Matrix-Mikrogefüge feinverteilte VC-Partikel eingelagert, wie sie in der Fig. 4 durch die kleinen, hellen, grauen, Punkte zu erkennen sind. Folglich sorgen die VC-Partikel zur Verstärkung des Matrix-Mikrogefüges, so daß die WSC-Partikel durch die Anlagerung von VC gestützt werden.

## Patentansprüche

1. Pulverförmiger Zusatzwerkstoff zum Aufbringen einer Verschleißschutzschicht aus einer Nickellegierungsmatrix und eingelagerten Wolfram- und Vanadiumkarbiden auf eine zu schützende Oberfläche im Wege des Metallspitzens, insbesondere Lichtbogen- oder Plasmaschweißens, abgesehen von Verunreinigungen bestehend aus
| | |
|---|---|
| Ni | 20 bis 80 Gew.-%, |
| W | 40 bis 70 Gew.-%, |
| V | 3 bis 24 Gew.-%, |
| B | 0,1 bis 5 Gew.-%, |
| Si | 0 bis 2 Gew.-%, |
| C | 0,1 bis 5 Gew.-%, |
| Summe (C + B + Si) 0,5 bis 12 Gew.-%, | |
| Summe aller Mischungskomponenten 100 Gew.-% | |
und zusätzlich enthaltend Flußmittel sowie Wolframkarbid-Körner mit einer Körnung von entweder
ca. 0,01 mm bis ca. 0,3 mm oder von
ca. 0,3 mm bis ca. 2,0 mm und
Vanadiumkarbid-Körner mit einer Körnung von
ca. 0,05 mm bis 0,3 mm.

2. Pulverförmiger Zusatzwerkstoff nach Anspruch 1, dadurch gekennzeichnet, daß zusätzlich Cr mit einem Gewichtsanteil von 4 bis 30 Gew.-% zugemischt wird.

3. Pulverförmiger Zusatzwerkstoff nach Anspruch 1 oder 2, dadurch gekennzeichnet, daß anstelle der in den Zusatzwerkstoff eingebrachten Vanadium-Körner mit Vanadium-Vorlegierungen, z.B. Ferro-Vanadium, als Pulverzusatz gearbeitet wird, wobei sich die Vanadium-Vorlegierungen in der Schmelze aufgrund der hohen Affinität des Kohlenstoffs zu Vanadium in die Vanadiumkarbid-Körner der angegebenen Korngrößen umwandeln.

4. Pulverförmiger Zusatzwerkstoff nach einem der Ansprüche 1 bis 3, dadurch gekennzeichnet, daß dieser als Füllung in einem Nickelröhrchen als verbrauchende Schweißelektrode, insbesondere Stab- oder Fülldrahtelektrode, vorliegt, wobei ca. 20 Gew.-% des Nickelanteils des pulverförmigen Zusatzwerkstoffes durch das Nickelröhrchen zur Verfügung gestellt werden.

5. Pulverförmiger Zusatzwerkstoff nach einem der Ansprüche 1 bis 4, dadurch gekennzeichnet, daß das Nickelröhrchen einen Außendurchmesser von 0,5 mm bis 8,0 mm, insbesondere 1,1 mm, und eine Wanddicke von 0,2 mm bis 2,0 mm aufweist.

6. Pulverförmiger Zusatzwerkstoff nach einem der Ansprüche 1 bis 5, dadurch gekennzeichnet, daß körniges Wolfram/Vanadium-Schmelzkarbid eingesetzt wird.

7. Pulverförmiger Zusatzwerkstoff nach einem der Ansprüche 1 bis 6, dadurch gekennzeichnet, daß Wolfram/ Vanadium-Schmelzkarbid in Kugelform verwendet wird.

8. Pulverförmiger Zusatzwerkstoff nach einem der Ansprüche 1 bis 7, dadurch gekennzeichnet, daß Wolfram/ Vanadiumkarbid/Kobalt-Pellets (Stücke) zum Einsatz kommen.

9. Verfahren zum Aufbringen einer Verschleißschutzschicht aus einer Nickellegierungsmatrix mit eingelagerten Wolfram- und Vanadiumkarbiden auf eine zu schützende Oberfläche im Wege des Lichtbogenschweißens, mit Hilfe eines pulverförmigen Zusatzwerkstoffes nach einem der Ansprüche 1 bis 8, wobei bei einer Spannung von mehr als 16 V im Stromstärkebereich von ca. 70 A bis 160 A die Schweißparameter (im wesentlichen Körnung, Schweißtemperatur und/oder -zeit) so eingestellt werden, daß die Vanadiumkarbid-Körner in Lösung gehen, die Wolframkarbid-Körner dagegen praktisch nicht in Lösung gehen.

10. Verfahren zum Aufbringen einer Verschleißschutzschicht aus einer Nickellegierungsmatrix mit eingelagerten Wolfram- und Vanadiumkarbiden auf eine zu schützende Oberfläche im Wege des Lichtbogenschweißens, mit Hilfe eines pulverförmigen Zusatzwerkstoffes nach einem der Ansprüche 1 bis 8, wobei bei einer Spannung von mehr als 16 V im Stromstärkebereich von ca. 140 A bis ca. 340 A die Schweißparameter (im wesentlichen Körnung, Schweißtemperatur und/oder -zeit) so eingestellt werden, daß die Wolframkarbid-Körner und die Vanadiumkarbid-Körner beim Schweißvorgang in der Nickellegierungsmatrix in Lösung gehen und beim Erkalten in homogener Verteilung ausgeschieden werden.

## Claims

1. A powdered additive material for depositing a wear protection layer comprising a nickel alloy matrix and dispersed tungsten and vanadium carbides on a surface to be protected, by a metal spraying route, particularly by arc or plasma welding, and consisting, apart from impurities, of
| | |
|---|---|
| Ni | 20 to 80 % by weight, |
| W | 40 to 70 % by weight, |
| V | 3 to 24 % by weight, |
| B | 0.1 to 5 % by weight, |
| Si | 0 to 2 % by weight, |
| C | 0.1 to % by weight, |
| sum of (C + B + Si) = 0.5 to 12 % by weight, | |
| sum of all the components of the mixture = 100 % by weight, | |
and additionally containing fluxes, as well as tungsten carbide grains with a grain size of either
about 0.01 mm to about 0.3 mm, or of
about 0.3 mm to about 2.0 mm, and
vanadium carbide grains with a grain size of
about 0.05 mm to 0.3 mm.

2. A powdered additive material according to claim 1, characterised in that Cr is admixed in addition in a proportion by weight of 4 to 30 % by weight.

3. A powdered additive material according to claims 1 or 2, characterised in that vanadium master alloys, e.g. ferrovanadium, are employed as a powdered additive instead of vanadium grains which are dispersed in the additive material, wherein the vanadium master alloys are converted in the melt into vanadium carbide grains of the given grain sizes due to the high affinity of carbon for vanadium.

4. A powdered additive material according to any one of claims 1 to 3, characterised in that it is present as a filling in a nickel tube as a consumable welding electrode, particularly a rod or cored wire electrode, wherein nickel corresponding to about 20 % by weight of the nickel content of the powdered additive material is made available by the nickel tube.

5. A powdered additive material according to any one of claims 1 to 4, characterised in that the nickel tube has an outside diameter of 0.5 mm to 8.0 mm, particularly of 1.1 mm, and has a wall thickness of 0.2 mm to 2.0 mm.

6. A powdered additive material according to any one of claims 1 to 5, characterised in that fused granular tungsten/vanadium carbide is used.

7. A powdered additive material according to any one of claims 1 to 6, characterised in that fused tungsten/vanadium carbide is used in spherical form.

8. A powdered additive material according to any one of claims 1 to 7, characterised in that tungsten/vanadium carbide/cobalt pellets (pieces) are used.

9. A method of depositing a wear protection layer comprising a nickel alloy matrix with dispersed tungsten and vanadium carbides on a surface to be protected, by an arc welding route, with the aid of a powdered additive material according to any one of claims 1 to 8, wherein at a voltage greater than 16 V over a range of current strengths from about 70 A to 160 A the welding parameters (essentially grain size, and welding temperature and/or time) are adjusted so that the vanadium carbide grains go into solution, but so that the tungsten carbide grains practically do not go into solution.

10. A method of depositing a wear protection layer comprising a nickel alloy matrix with dispersed tungsten and vanadium carbides on a surface to be protected, by an arc welding route, with the aid of a powdered additive material according to any one of claims 1 to 8, wherein at a voltage greater than 16 V over a range of current strengths from about 140 A to about 340 A the welding parameters (essentially grain size, and welding temperature and/or time) are adjusted so that the tungsten carbide grains and the vanadium carbide grains go into solution in the nickel alloy matrix during the welding operation and are separated with a homogeneous distribution on cooling.

## Revendications

1. Matériau d'apport pulvérulent pour appliquer une couche de protection contre l'usure, constituée d'une matrice en alliage de nickel et d'inclusions de carbures de tungstène et de vanadium, sur une surface à protéger au cours d'une projection de métal, en particulier une soudure à l'arc électrique ou au plasma, composé des éléments suivants, abstraction faite des impuretés :
| | |
|---|---|
| Ni | 20 à 80 % en poids, |
| W | 40 à 70 % en poids, |
| V | 3 à 24 % en poids, |
| B | 0,1 à 5 % en poids, |
| Si | 0 à 2 % en poids, |
| C | 0,1 à 5 % en poids, |
| somme (C + B + Si) 0,5 à 12 % en poids, | |
| somme de tous les composants du mélange 100 % en poids | |
et contenant, en plus, du fondant ainsi que des grains de carbure de tungstène avec une granulométrie
d'environ 0,01 mm à environ 0,3 mm ou
d'environ 0,3 mm à environ 2,0 mm et
des grains de carbure de vanadium avec une granulométrie
d'environ 0,05 mm à 0,3 mm.

2. Matériau d'apport pulvérulent selon la revendication 1, caractérisé en ce que du Cr est également ajouté au mélange dans une proportion de 4 à 30 % en poids.

3. Matériau d'apport pulvérulent selon la revendication 1 ou 2, caractérisé en ce que, au lieu des grains de vanadium inclus dans le matériau d'apport, on met en oeuvre des préalliages de vanadium, par exemple du ferro-vanadium, en tant qu'additifs pulvérulents, les préalliages de vanadium se transformant dans le bain de fusion en grains de carbure de vanadium de la granulométrie indiquée en raison de l'affinité élevée du carbone pour le vanadium.

4. Matériau d'apport pulvérulent selon l'une des revendications 1 à 3, caractérisé en ce qu'il intervient en tant que matière de remplissage dans un tube en nickel servant d'électrode de soudage consommable, en particulier d'électrode en baguette ou à fil fourré, environ 20 % en poids de la fraction de nickel du matériau d'apport pulvérulent étant fournis par le tube en nickel.

5. Matériau d'apport pulvérulent selon l'une des revendications 1 à 4, caractérisé en ce que le tube en nickel présente un diamètre extérieur de 0,5 mm à 8,0 mm, en particulier de 1,1 mm, et une épaisseur de paroi de 0,2 mm à 2,0 mm.

6. Matériau d'apport pulvérulent selon l'une des revendications 1 à 5, caractérisé en ce que du carbure de tungstène/vanadium en fusion est mis en oeuvre.

7. Matériau d'apport pulvérulent selon l'une des revendications 1 à 6, caractérisé en ce qu'on utilise du carbure de tungstène/vanadium en fusion sous forme de billes.

8. Matériau d'apport pulvérulent selon l'une des revendications 1 à 7, caractérisé en ce qu'on met en oeuvre des pastilles (morceaux) de carbure de tungstène/vanadium/cobalt.

9. Procédé pour appliquer une couche de protection contre l'usure, constituée d'une matrice en alliage de nickel avec inclusions de carbures de tungstène et de vanadium, sur une surface à protéger au cours d'une soudure à l'arc électrique à l'aide d'un matériau d'apport pulvérulent selon l'une des revendications 1 à 8, les paramètres de soudage (pour l'essentiel la granulométrie, la température et/ou le temps de soudage) étant réglés, en présence d'une tension supérieure à 16 V dans la plage d'intensité de courant d'environ 70 A à 160 A, de façon que les grains de carbure de vanadium entrent en solution mais qu'à l'inverse les grains de carbure de tungstène n'entrent pratiquement pas en solution.

10. Procédé pour appliquer une couche de protection contre l'usure, constituée d'une matrice en alliage de nickel avec inclusions de carbures de tungstène et de vanadium, sur une surface à protéger au cours d'une soudure à l'arc électrique à l'aide d'un matériau d'apport pulvérulent selon l'une des revendications 1 à 8, les paramètres de soudage (pour l'essentiel la granulométrie, la température et/ou le temps de soudage) étant réglés, en présence d'une tension supérieure à 16 V dans la plage d'intensité de courant d'environ 140 A à 340 A, de façon que, lors du soudage, les grains de carbure de tungstène et les grains de carbure de vanadium entrent en solution dans la matrice en alliage de nickel et, lors du refroidissement, soient précipités avec une répartition homogène.
